# EUROPÄISCHE PATENTANMELDUNG

(11) **EP 1 832 499 A2**
(43) Veröffentlichungstag der Anmeldung: **12.09.2007**
(21) Anmeldenummer: 07003954.0
(22) Anmeldetag: 27.02.2007
(51) Int. Cl.: B62D 31/00, B62D 33/067, F41H 7/04

(54) **Militärisches Kraftfahrzeug zum Mannschaftstransport**

(30) Priorität: 07.03.2006 DE 202006003506 U
(71) Anmelder: Krauss-Maffei Wegmann GmbH & Co. KG, 80997 München (DE)
(72) Erfinder: Schlegl, Eugen, 82194 Gröbenzell (DE); Werner, Ulrich, 81241 München (DE)
(74) Vertreter: Feder, Wolf-Dietrich

(57) **Zusammenfassung**

Ein militärisches Kraftfahrzeug zum Mannschaftstransport mit einem Fahrgestell (1), auf dem hintereinander eine Fahrerkabine (2) und ein Mannschaftsgehäuse (3) angeordnet sind. Die Fahrerkabine (2) ist gegenüber dem Fahrgestell (1) aus einer Normalstellung heraus um eine im Bereich ihrer vorderen Kante angeordnete Schwenkachse (S) nach vorne verkippbar. In der Normalstellung ist die Fahrerkabine (2) mit dem Mannschaftsgehäuse (3) fest, aber lösbar, verbunden.

## Beschreibung

Die Erfindung betrifft ein militärisches Kraftfahrzeug zum Mannschaftstransport mit den Merkmalen aus dem Oberbegriff des Patentanspruchs 1. Derartige Kraftfahrzeuge sind als LKWs bekannt und die Verkippbarkeit der Fahrerkabine eröffnet die Möglichkeit, den als Mittelmotor ausgebildeten Antriebsmotor zu Wartungs- und Reparaturzwecken zugänglich zu machen. Bei diesen Kraftfahrzeugen ist in der Normalstellung, also bei auf dem Fahrgestell aufsitzender Fahrerkabine, Letztere über ein hydraulisches Fahrerhausschloß lösbar mit dem Fahrgestell verbunden.

Beim Einsatz eines solchen Kraftfahrzeugs als militärisches Kraftfahrzeug mit einem auf dem Fahrgestell fest angeordneten, gegebenenfalls gepanzerten Mannschaftsgehäuse, ergeben sich Probleme. Durch die notwendige Kippfunktion ist die Länge der Fahrerkabine praktisch beschränkt, da ansonsten zu hohe Kräfte beziehungsweise Momente und eine zu große Höhe des Fahrzeugs im gekippten Zustand der Fahrerkabine entstehen. Es ist daher notwendig, auf dem Fahrzeug zwei getrennte Gehäuse aufzubauen, nämlich die kippbare Fahrerkabine vom und ein fest aufgebautes Mannschaftsgehäuse dahinter. Besondere Nachteile entstehen, wenn diese beiden Gehäuse keine direkte Verbindung miteinander haben, weil dann zwischen den Innenräumen der beiden Gehäuse keine direkte Kommunikation möglich ist und weiterhin zwei Klimaanlagen, zwei ABC-Anlagen, ein Schutz der Heckwand der Fahrerkabine, eine Frontwand am Mannschaftsgehäuse usw. notwendig werden.

Der Erfindung liegt die Aufgabe zugrunde, ein militärisches Kraftfahrzeug mit den Merkmalen aus dem Oberbegriff des Patentanspruchs 1 so auszugestalten, dass die direkte Kommunikation aller Besatzungsmitglieder sichergestellt ist, und dass der Aufwand bei der Ausstattung gering gehalten werden kann.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, die verkippbare Fahrerkabine nicht wie üblich mit dem Fahrgestell zu verbinden, sondern sie wird durch feste, aber lösbare Verbindungselemente, beispielsweise Schraubverbindungen, mit dem Mannschaftsgehäuse verbunden. Dies eröffnet eine Reihe von Vorteilen. So haben beispielsweise bei einer derartigen Ausstattung die Fahrerkabinenrückwand und die Mannschaftsgehäusefrontwand keine Schutzfunktion mehr. Sie können dünner werden, oder mindestens teilweise entfallen.

In der Normalstellung sind die Innenräume von Fahrerkabine und Mannschaftsgehäuse als ein Raum miteinander verbunden. Dies ermöglicht eine direkte Kommunikation aller Besatzungsmitglieder. Weiterhin werden bestimmte Ausstattungselemente, wie beispielsweise die ABC-Anlage, die Klimaanlage usw. nur einmal benötigt. Die Funkanlagen können so angeordnet werden, dass alle Besatzungsmitglieder Zugriff haben.

Weiterhin bietet diese Konstruktion die Möglichkeiten einer Modularität. Während die Fahrerkabine bei unterschiedlichen Fahrzeugtypen in der Regel die gleiche ist, sind Form und Ausstattung des Mannschaftsgehäuses entsprechend unterschiedlichen Missionen in der Regel sehr verschieden. Durch den gewählten erfindungsgemäßen Aufbau kann das Fahrzeug unabhängig vom Mannschaftsgehäuse gefertigt werden und unmittelbar vor der Nutzung mit dem Mannschaftsgehäuse und der gewünschten Missionsausstattung vereinigt werden.

Im folgenden wird anhand der beigefügten Zeichnungen ein Ausführungsbeispiel für ein militärisches Kraftfahrzeug nach der Erfindung näher erläutert.

In den Zeichnungen zeigen:
- Fig. 1: ein militärisches Kraftfahrzeug in Seitenansicht mit nach vorne verkippter Fahrerkabine;
- Fig. 2: in einer Darstellung analog Fig. 1 das Kraftfahrzeug in der Normalstellung;
- Fig. 3: das Kraftfahrzeug nach den Figuren 1 und 2 in einer perspektivischen Darstellung bei verkippter Fahrerkabine.

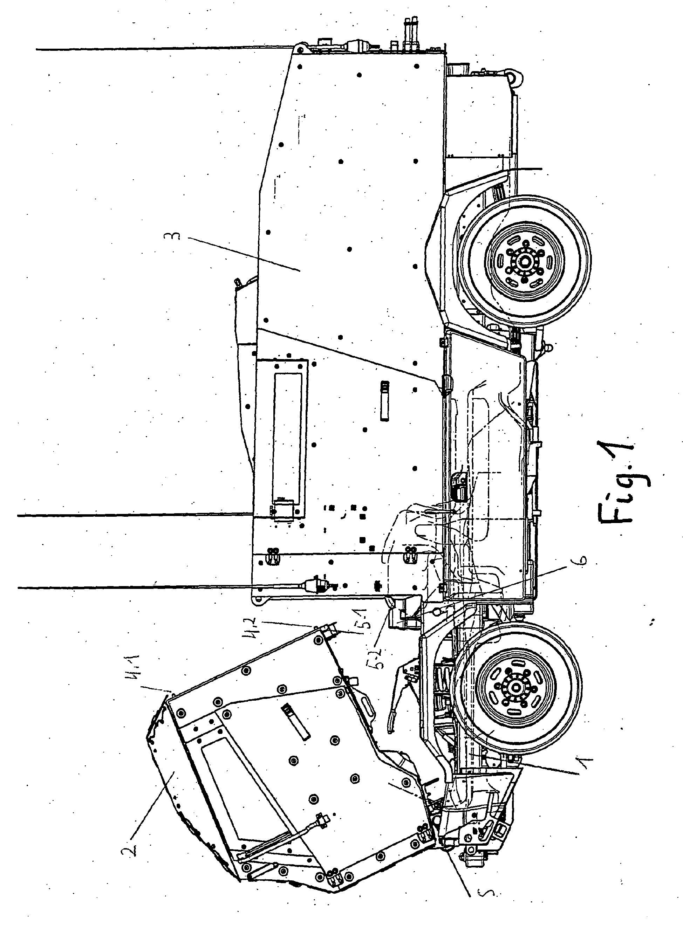

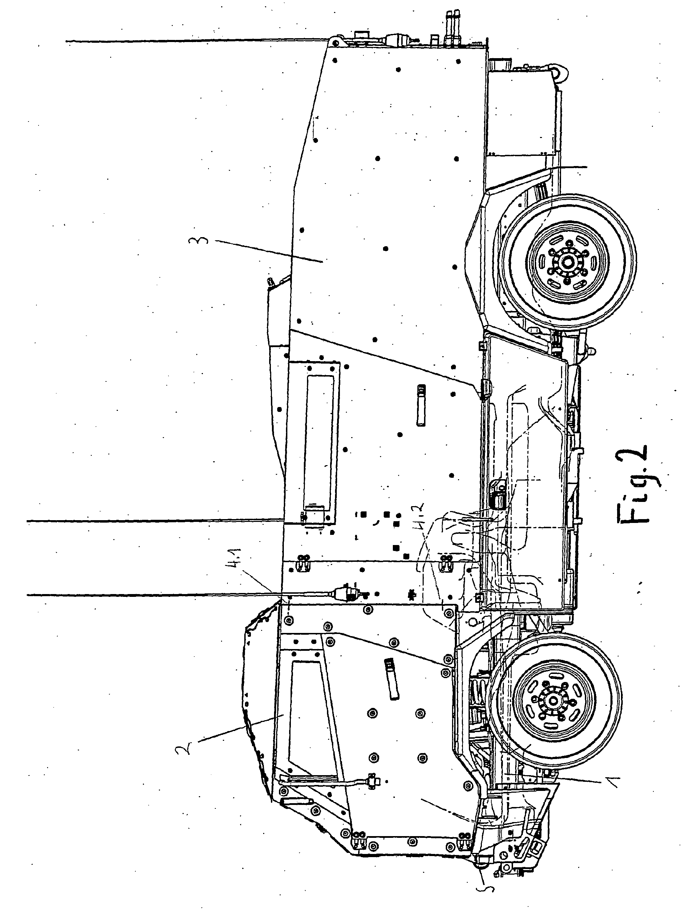

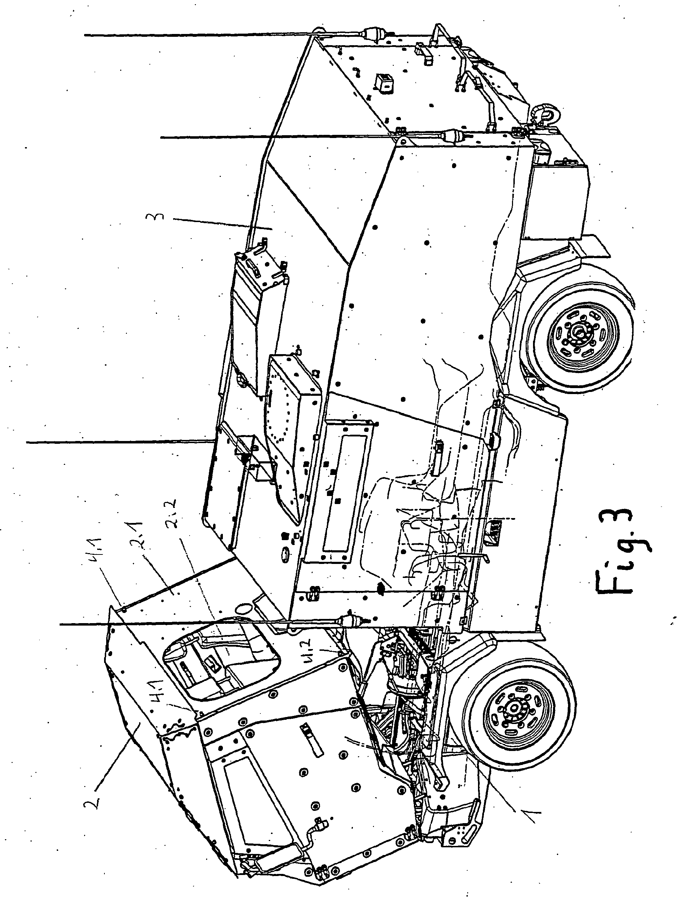

Das in den Zeichnungen dargestellte militärische Kraftfahrzeug besitzt ein Fahrgestell 1 mit Räderfahrwerk, auf dem hintereinander eine Fahrerkabine 2 und ein Mannschaftsgehäuse 3 angeordnet sind. Die Fahrerkabine 2 ist gegenüber dem Fahrgestell 1 aus der in Fig. 2 dargestellten Normalstellung um eine horizontale Schwenkachse S, die im Bereich ihrer vorderen Kante angeordnet ist, in die in den Figuren 1 und 3 dargestellte Stellung verkippbar, in welcher der Mittelmotor 6 des Fahrzeugs zugänglich wird.

In der Normalstellung der Fahrerkabine 2 ist diese über in FahrzeugLängsrichtung verlaufende, lösbare Schraubverbindungen 4.1 und 4.2 mit dem Mannschaftsgehäuse 3 verbunden. Zusätzlich sind die Fahrerkabine 2 und das Mannschaftsgehäuse 3 über ein am Mannschaftsgehäuse bzw. der Fahrerkabine angeordnetes hydraulisches Fahrerhausschloß 5.1-5.2 miteinander verriegelbar.

Entstehende geringe Relativbewegungen beim Trennen und/oder Verbinden von Fahrerkabine 2 und Mannschaftsgehäuse 3, sowie die vorhandenen Toleranzen, werden über nicht eigens dargestellte Gummilager, mittels derer Fahrerkabine 2 und Mannschaftsgehäuse 3 auf dem Fahrgestell 1 gelagert sind, aufgenommen.

Wie Fig. 3 zu entnehmen, besitzt die Fahrerkabine 2 eine relativ dünn ausgeführte Rückwand 2.1 mit einem Durchbruch 2.2 zum Innenraum des Mannschaftsgehäuses 3 hin. Letzteres besitzt überhaupt keine Frontwand, so dass bei abgesenkter Fahrerkabine 2 die Innenräume der Fahrerkabine 2 und des Mannschaftsgehäuses 3 direkt miteinander verbunden sind.

## Patentansprüche

1. Militärisches Kraftfahrzeug zum Mannschaftstransport mit einem Fahrgestell (1), auf dem hintereinander eine Fahrerkabine (2) und ein Mannschaftsgehäuse (3) angeordnet sind, wobei die Fahrerkabine (2) gegenüber dem Fahrgestell (1) aus einer Normalstellung heraus um eine, im Bereich ihrer vorderen Kante angeordnete, Schwenkachse (S) nach vorne verkippbar ist, **dadurch gekennzeichnet, dass** in der Normalstellung die Fahrerkabine (2) mit dem Mannschaftsgehäuse (3) fest, aber lösbar, verbunden ist.

2. Kraftfahrzeug nach Anspruch 1, **dadurch gekennzeichnet, dass** die Verbindung zwischen Fahrerkabine (2) und Mannschaftsgehäuse (3) über Schraubverbindungen (4.1, 4.2) erfolgt.

3. Kraftfahrzeug nach Anspruch 1 oder 2, **dadurch gekennzeichnet, dass** die Rückwand (2.1) der Fahrerkabine (2) mit einem Durchbruch (2.2) versehen ist.

4. Kraftfahrzeug nach Anspruch 3, **dadurch gekennzeichnet, dass** das Mannschaftsgehäuse (3) eine offene Vorderseite aufweist.

5. Kraftfahrzeug nach Anspruch 3, **dadurch gekennzeichnet, dass** die Vorderwand des Mannschaftsgehäuses mit einem dem Durchbruch in der Rückwand der Fahrerkabine gegenüberliegenden Durchbruch versehen ist.

6. Kraftfahrzeug nach einem der Ansprüche 1 bis 5, **dadurch gekennzeichnet, dass** Fahrerkabine (2) und/oder Mannschaftsgehäuse (3) über gummielastische Lager auf dem Fahrgestell (1) gelagert sind.

7. Kraftfahrzeug nach einem der Ansprüche 1 bis 6, **dadurch gekennzeichnet, dass** die Fahrerkabine (2) und das Mannschaftsgehäuse (3) über ein am Mannschaftsgehäuse (3) angeordnetes hydraulisches Fahrerhausschloß (5.1-5.2) miteinander verriegelbar sind.
